Europäisches Patentamt

European Patent Office

Office européen des brevets

(11) Publication number: **0 112 558**
**B1**

## (12) EUROPEAN PATENT SPECIFICATION

(45) Date of publication of patent specification: 24.08.88

(21) Application number: 83112973.9

(22) Date of filing: 22.12.83

(51) Int. Cl.⁴: **B 01 D 27/00**, B 01 D 27/06, B 01 D 29/16

(54) Filter.

(30) Priority: 24.12.82 JP 230880/82
30.08.83 JP 157205/83

(43) Date of publication of application:
04.07.84 Bulletin 84/27

(45) Publication of the grant of the patent:
24.08.88 Bulletin 88/34

(84) Designated Contracting States:
DE GB NL

(56) References cited:
DE-A-2 922 445
DE-A-2 948 925
US-A-3 692 184
US-A-3 937 663
US-A-4 218 324

(73) Proprietor: Nihon Schumacher K.K.
Toyo Building 12-20 Jingumae, 6-chome
Shibuya-ku Tokyo-To (JP)
(73) Proprietor: Toyo Element Kogyo K.K.
1572 Sugao Yanagi-cho Miyamae-ku
Kawasaki City Kanagawa Prefecture (JP)

(72) Inventor: Kuwajima, Soichi
23-16 Daitakubo 1-chome
Urawa City Saitama Prefecture (JP)
Inventor: Sakamoto, Shojiro
13-203 Takayama-Danchi 96 Taira, Miyamaeku
Kawasaki-City Kanagawa Prefecture (JP)

(74) Representative: Hoeger, Stellrecht & Partner
Uhlandstrasse 14c
D-7000 Stuttgart 1 (DE)

Courier Press, Leamington Spa, England.

## Description

This invention relates to a filter, especially a filter comprising a cylindrical, perforated core encircled by a filter sheet pleated to the shape of a concertina, the two ends of the filter sheet being fitted into and held by end plates.

In the case of such filters, it is occasionally necessary to replace the filter material due either to the fact that such filter material becomes clogged or for other reasons. Unfortunately, no filters are yet available that can guarantee a sufficient workability which would merit replacement of the filter material or provide a good sealing effect of the filters after such replacement.

It is therefore the object of this invention to improve a filter of the type described above such that the work of fitting the filter material onto the core is made considerably easier and a high sealing effect is ensured after the filter material has been fitted.

In order to achieve this object the invention has the following characteristics. Areas for fixation are provided at the ends of the filter sheet, these areas for fixation enclosing the majority of the pleats of the filter sheet with the exception of some pleats in at least one circumferential area. The pleats in the areas for fixation are treated with a hardening resin or the like to harden the pleats in the areas for fixation in a required pitch in order to form solid and fixed areas which fit closely to and cover the core.

In addition, the pleats between the areas for fixation are adapted to be freely spread apart and pressed together in a circumferential direction so that they are adjustable to and fit onto the core.

If necessary, several soft packings can be attached to the sides of the unfixed and free pleats. This will permit the two end plates to hold both ends of the filter material firmly so that it will not move out of place.

The following description and the attached drawings refer to preferred embodiments of the invention. The drawings show:

Fig. 1 A horizontal cross section of one preferred embodiment of a filter according to the invention;

Fig. 2 a cross-sectional view of the filter material covering the core, as shown in Fig. 1;

Fig. 3 an oblique view of a soft packing as shown in Fig. 2;

Fig. 4 an enlarged view of one portion of the filter material completely fitted to the core;

Fig. 5 an enlarged, cross-sectional view of one portion of the free pleats, to which soft packings are attached;

Fig. 6 a horizontal cross section of another preferred embodiment of a filter according to the invention;

Fig. 7 an oblique view of one example of a divided section of filter material, as shown in Fig. 6;

Fig. 8 a cross section of the divided section of filter material, covering and being fitted to the core;

Fig. 9 an enlarged view of a piece for fixation and

Fig. 10 view of "fixation" finished by means of a piece for fixation.

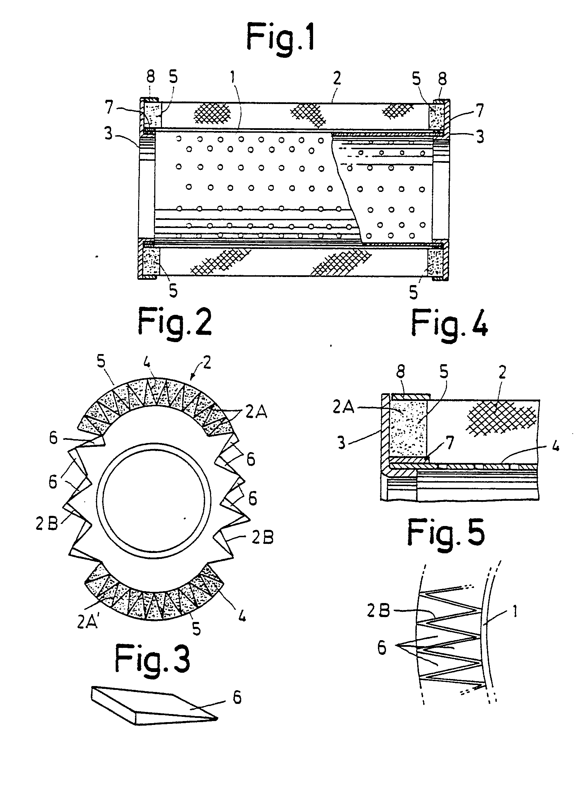

Fig. 1 shows the horizontal cross section of one embodiment of this invention that is of the same basic construction as a conventional filter type having a core 1 consisting of a perforated tube, filter material 2 covering and fitted to the core 1 and end plates 3, 3 that are ring-shaped and fitted to both ends of core 1 in order to hold the filter material 2 firmly in place.

The filter material 2 consists of filter sheets pleated to the shape of a concertina and formed into a cylindrical construction. The filter sheets have, in general, about 160 pleats in circumference, covering and fitted to the outer surface of the core 1.

In this invention, filter material 2 is fitted onto core 1 by the following method: Two sections of pleats 2A, 2A of filter material 2, which are arranged on diametrally opposite sides, have at bth ends areas for fixation 5, 5, where the pleats are treated to a required extent of area with hardening resin 4 or the like so that the pleats are arranged in a required pitch and in the form of an arc to be closely fitted to the outer surface of core 1. These areas for fixation 5, 5 have between them two other sections with pleats of filter material 2 which are in an unfixed and free state. These are called free pleats 2B, 2B.

Therefore, these sections of free pleats 2B, 2B may be moved freely to permit enlargement of the diameter of filter material 2, which can then be fitted onto the outer surface of core 1 so that all the pleats 2A and 2B cover the core 1 in the required pitch.

In this embodiment, after due consideration of the sealing effect at the areas with free pleats 2B, soft packings 6 made of soft synthetic resin or the like, as shown in Fig 3, are attached to the surface of free pleats 2B.

The soft packing 6 has a wedge-shaped end. When the soft packings 6 are attached to the surface of free pleats 2B, 2B so as to be arranged alternately in contact with one surface of each free pleat 2B, as shown in Fig. 2, each soft packing 6 abuts closely on the surface of the adjacent pleat in a well pleated and packed state, as shown in Fig 5, and thus both ends of the filter material 2 can be perfectly sealed.

Moreover, at the outer circumferential surface of the areas for fixation 5, 5 and the areas to be provided with soft packings 6 gaskets 7 are inserted on the outer surface of core 1. Reference numeral 8 describes a fixing band.

In order to make the filter material 2 of the invention having the above-mentioned construction fit onto core 1, when the areas for fixation 5,5 aire outstretched the sections with free pleats 2B are extended and diametrally enlarged, as shown in Fig. 2, permitting the filter material 2 to be fitted quite easily onto core 1. After that, when the areas for fixation 5, 5 are closely fitted to the outer surface of core 1 the free pleats 2B, 2B are pressed together and each packing 6 that is attached to the surface of each free pleat 2B, 2B will then abut on the surface of the adjacent pleat, resulting in the required arrangement of the pleats. At the same time, this makes both ends of the filter material 2 have a perfect sealing effect to prevent the liquids from leaking out.

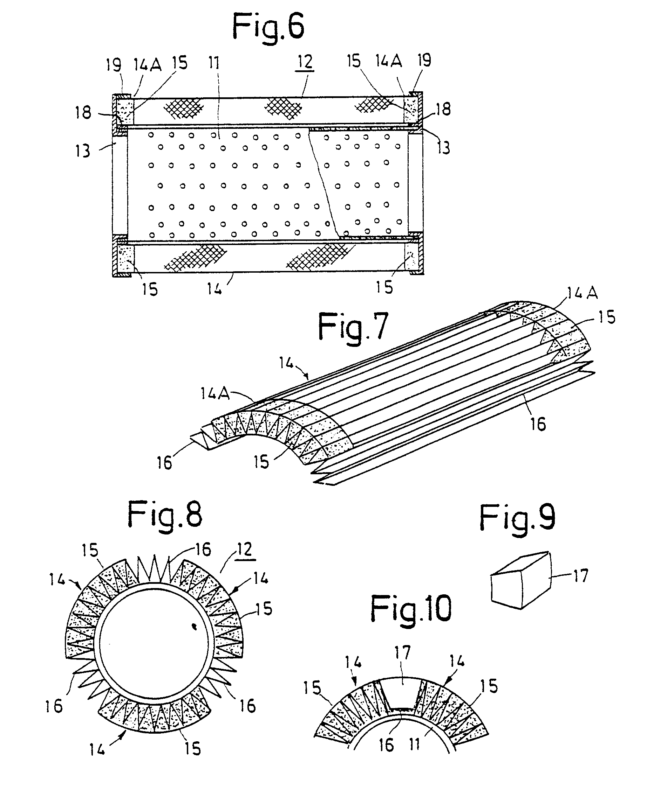

Fig. 6 shows the horizontal cross section of another embodiment of this invention that has the same basic construction as the conventional filter types, that is a core 11 consisting of a perforated tube, filter material 12 covering and fitted to the core 11 and end plates 13, 13 that are ring-shaped and fitted to both ends of core 11 in order to hold the filter material 12 firmly in place.

The filter material 12 consists of filter sheets pleated to the shape of a concertina and formed into a cylindrical construction, having usually about 160 pleats in circumference, covering and fitted to the outer surface of core 11.

In this embodiment the filter material 12 is axially divided into a plurality of divided sections of filter material 14, 14. The divided section of filter material 14, as shown in Fig. 7, has areas for fixation 14A at both its longitudinal ends where most of the pleats are treated with hardening resin 15 or the like so as to be arranged in a required pitch and to be built up into solid and fixed areas in the form of an arc to cover and closely fit to the outer surface of core 11.

Concerning the structure of the divided section of filter material 14, it can be optionally divided into two sections or three sections or four sections etc., depending on the size of core 11 and, concerning the number of unfixed and free pleats, it is sufficient to have two to five of these pleats.

To cover and fit the divided sections of filter material 14 onto the outer surface of core 11, the following method can be applied: As shown in Fig. 8, each divided section 14, 14 is placed on core 11 so that its inside part covers and fits to the outer surface of core 11 while free pleats 16, 16 at both ends are laid one on top of the other and connected by suitable means of adhesion or otherwise by means of pieces for fixation 17 having wedge-shaped elastic bodies, as shown in Fig. 9, that are prepared in advance. In this case, as shown in Fig. 10, the pieces for fixation 17 are attached to some free pleats 16, 16 and such free pleats can be held in a pressed and fixed state despite their being out of shape. Therefore, when gaskets 18 are attached to each inner circumference of the areas for fixation 14A, which are then covered and fitted by end plates 13, 13 and tightly attached by fixing bands, 19, the filter material 12 can be composed of a plurality of divided sections of filter material 14, 14, as shown in Fig. 6.

As stated above, the present invention permits filter material pleated to the shape of a concertina to have the pleats arranged in a required pitch and for the filter material to be fitted exactly onto the core. Thus, mounting of the filter material onto the core is very easy. Moreover, as the areas for fixation provide for a good sealing effect, only small sections of free pleats remain to be sealed and their sealing can be easily secured. Thus, this invention offers a remarkable improvement in the feasibility of mounting and obtaining a high sealing effect.

## Claims

1. A filter comprising a cylindrical, perforated core (1; 11) encircled by a filter sheet (2; 12) pleated to the shape of a concertina, the two ends of the filter sheet (2; 12) being fitted into and held by end plates (3; 13), characterized in that areas for fixation (5; 14A) are provided at the ends of the filter sheet (2; 12), said areas for fixation (5; 14A) enclosing the majority of the pleats of the filter sheet (2; 12) with the exception of some pleats (2B; 16) in at least one circumferential area, in that the pleats in the areas for fixation (5; 14A) are treated with a hardening resin (4; 15) or the like to harden the pleats in the areas for fixation (5; 14A) in a required pitch in order to form solid and fixed areas which fit closely to and cover the core (1; 11), and in that the pleats (2B; 16) between the areas for fixation (5; 14A) are adapted to be freely spread apart and pressed together in a circumferential direction so that they are adjustable to and fit onto the core (1; 11).

2. Filter as defined in claim 1, characterized in that the free pleats (2B) between the solid areas for fixation (5) bear wedge-shaped packings (6) which abut sealingly against the filter sheet (2) when the pleats (2B) fit onto the core, the packings (6) each being attached to one side only of each free pleat (2B).

3. Filter as defined in claim 1, characterized in that the free pleats (16) at the ends of the filter sheet (12) are pressed against the core (11) by means of pieces for fixation (17).

4. Filter as defined in any of the preceding claims, characterized in that a fixing band (8; 19) is provided, which encircles the ends of the filter sheet (2; 12) and presses them against the core (1; 11).

5. Filter as defined in any of the preceding claims, characterized in that a gasket (7; 18) is inserted between the ends of the filter sheet (2; 12) and the core (1; 11).

## Patentansprüche

1. Filter mit einem zylindrischen, perforierten Kern (1; 11), der von einem in ziehharmonikaform gefalteten Filterblatt (2; 12) umgeben ist, wobei die Enden des Filterblattes in Endplatten (3; 13) eingepaßt und durch diese gehalten sind, dadurch gekennzeichnet, daß die Befestigungsbereiche (5; 14A) an den Enden der Filterblätter (2; 12) vorgesehen sind, die die Mehrzahl der Falten des Filterblattes (2; 12) umfassen, mit Ausnahme einiger Falten (2B; 16) in mindestens einem umfangsmäßigen Bereich, daß die Falten in den Befestigungsbereichen (5; 14A) mit einem aushärtenden Harz (4; 15) oder einem ähnlichen Material behandelt sind, um die Falten in den Befestigungsbereichen mit einem erforderlichen Abstand zu versteifen, um somit feste und fixierte Bereiche zu bilden, die eng an dem Kern (1; 11) anliegen und diesen abdecken, und daß die Falten (2B; 16) zwischen den Befestigungsbereichen (5; 14A) so ausgebildet sind, daß sie sich in Umfangsrichtung leicht auseinanderziehen und zusammenpressen lassen, so daß sie an den Kern (1; 11) anpaßbar sind und an diesem anliegen.

2. Filter nach Anspruch 1, dadurch gekennzeichnet, daß die freien Falten (2B) zwischen den Befestigungsbereichen (5) keilförmige Dichtpakkungen tragen, die dichtend gegen das Filterblatt (2) anliegen, wenn die Falten (2B) auf dem Kern sitzen, wobei jede Dichtpackung (6) nur an einer Seite einer jeden freien Falte (2B) befestigt ist.

3. Filter nach Anspruch 1, dadurch gekennzeichnet, daß die freien Falten (16) an den Enden des Filterblattes (12) durch Befestigungsteile (17) gegen den Kern (11) gepreßt werden.

4. Filter nach einem der voranstehenden Ansprüche, dadurch gekennzeichnet, daß ein Befestigungsband (8; 19) vorgesehen ist, das die Enden des Filterblattes (2; 12) umfaßt und diese gegen den Kern (1; 11) drückt.

5. Filter nach einem der voranstehenden Ansprüche, dadurch gekennzeichnet, daß eine Dichtung (7; 18) zwischen den Enden des Filterblattes (2; 12) und dem Kern (1; 11) eingesetzt ist.

**Revendications**

1. Filtre comprenant un noyau (1; 11) sous forme d'un manchon cylindrique perforé, entouré par une feuille filtrante (2; 12) pliée en accordéon et dont les deux extrémités latérales sont disposées et tenues dans des anneaux d'extrêmité (3; 13), caractérisé en ce que des zones de fixation (5; 14A) sont prévues aux extrémités latérales de la feuille filtrante (2; 12), zones de fixation (5, 14A) qui comprennent la majorité des plis de la feuille filtrante (2; 12), à l'exception de quelques plis (2B; 16) dans au moins une zone circonférentielle, en ce que les plis dans les zones de fixation (5; 14A) sont traités avec une résine durcissante (4; 15) ou une matière semblable pour durcir les plis dans les zones de fixation (5; 14A), avec maintien des plis à l'espacement ou au pas nécessaire, afin de former des zones solides et fixes qui s'adaptent intimement sur et recouvrent le noyau (1; 11), et que les plis (2B; 16) entre les zones de fixation (5; 14A) sont disposés pour pouvoir être étirés et comprimés librement dans le sens circonférentiel, de manière qu'ils soient ajustables et adaptables sur le noyau (1; 11).

2. Filtre selon la revendication 1, caractérisé en ce que les plis libres (2B) entre les zones de fixation (5) solides portent des éléments de garnissage (6) en forme de coins qui s'appliquent de façon étanche contre la feuille filtrante (2) lorsque les plis (2B) sont adaptés sur le noyau, les éléments de garnissage (6) étant chacun attachés seulement à un côté de chaque pli libre (2B).

3. Filtre selon la revendication 1, caractérisé en ce que les plis libres (16) aux extrémités de la feuille filtrante (12) sont pressés contre le noyau (11) au moyen de pièces de fixation (17).

4. Filtre selon l'une quelconque des revendications précédentes, caractérisé par la prévision d'un ruban de fixation (8; 19) qui encercle les extrémités de la feuille filtrante (2; 12) et qui les presse contre le noyau (1; 11).

5. Filtre selon l'une quelconque des revendications précédentes, caractérisé en ce qu'un joint d'étanchéité (7; 18) est disposé entre les extrémités de la feuille filtrante (2; 12) et le noyau (1; 11).

# Fig.1

# Fig.2

# Fig.3

# Fig.4

# Fig.5

# Fig.6

# Fig.7

# Fig.8

# Fig.9

# Fig.10